# FASCICULE DE BREVET EUROPEEN

(11) **EP 2 633 218 B1**
(45) Date de publication et mention de la délivrance du brevet: **17.09.2014**
(21) Numéro de dépôt: 11785749.0
(22) Date de dépôt: 25.10.2011
(51) Int. Cl.: F16L 21/03, F16L 37/084

(54) **ASSEMBLAGE AVEC GARNITURE D'ÉTANCHÉITÉ AVEC INSERT DE VERROUILLAGE.**
ROHRVERBINDUNG MIT EINEM DICHTRING, DER EINE SPERREINLAGE AUFWEIST
ASSEMBLY HAVING SEALING GASKET WITH LOCKING INSERT

(30) Priorité: 26.10.2010 FR 1058776
(43) Date de publication de la demande: 04.09.2013
(73) Titulaire: Saint-Gobain PAM, 54000 Nancy (FR)
(72) Inventeur: PERCEBOIS, Alain, F-54700 Blenod Les Pont-A-Mousson (FR); MAIRE, François, F-54121 Vandieres (FR); JOLY, Patrick, F-54550 Bainville Sur Madon (FR); EUGENE, Christian, F-54700 Bouxieres Sous Froidmont (FR)
(74) Mandataire: Blot, Philippe Robert Emile
(86) Numéro de dépôt international: PCT/FR2011/052488
(87) Numéro de publication internationale: WO 2012/056163

(56) Documents cités:
- EP-A1- 0 526 373
- US-A- 5 360 218
- US-A- 5 645 285
- US-A1- 2003 107 214
- US-A1- 2007 216 112

## Description

La présente invention concerne un assemblage étanche et verrouillé, du type comprenant un bout uni d'un premier élément de canalisation, un bout à emboîtement d'un second élément de canalisation et une garniture d'étanchéité composite pour l'assemblage étanche et verrouillé entre le bout uni et le bout à emboîtement, la garniture d'étanchéité comprenant d'une part un anneau en matière élastique qui s'étend selon un axe central (X-X), et qui a un corps et un talon d'ancrage, et d'autre part au moins un insert de verrouillage noyé au moins partiellement dans le talon d'ancrage,
le bout à emboîtement comprenant une gorge d'ancrage annulaire, la gorge d'ancrage étant délimitée par une surface inclinée disposée axialement et radialement entre une surface de fond et une surface frontale annulaire,
l'insert de verrouillage comprenant
- une tête adaptée pour être insérée dans la gorge d'ancrage du bout à emboîtement, et un pied,
la tête comportant une saillie radiale, adaptée pour s'appliquer contre la surface de fond de la gorge d'ancrage du bout à emboîtement et une première saillie inclinée, adaptée pour s'appliquer contre la surface inclinée de la gorge d'ancrage.

Elle s'applique notamment aux assemblages étanches et verrouillés de deux tuyaux en fonte.

Le document EP-A-526 373 décrit une garniture d'étanchéité composite comprenant un corps d'étanchéité et un talon d'ancrage en matière élastique ainsi qu'une pluralité d'inserts de verrouillage en matériau rigide noyés dans le talon d'ancrage. Chaque insert présente une tête d'ancrage destinée à prendre appui sur le fond d'une gorge d'ancrage ménagée dans un bout à emboîtement, ainsi que des dents d'accrochage adaptées pour venir s'engager dans la surface externe d'un bout uni de manière à empêcher des mouvements axiaux qui pourraient séparer le bout uni du bout à emboîtement sous l'action des forces axiales engendrées par la pression du fluide circulant à travers le bout uni et le bout à emboîtement.

Le document US 5,645,285 décrit un assemblage étanche selon le préambule de la revendication 1.

L'inclinaison de chaque insert de verrouillage est fonction du jeu entre le diamètre externe du bout uni et le diamètre interne du bout à emboîtement. L'accrochage de l'insert sur le bout uni induit une force de réaction dont l'angle d'inclinaison sur la direction médiane varie en fonction du jeu présent entre les bouts assemblés.

Plus cet angle de réaction, mesuré par rapport à la direction radiale, est élevé plus le verrouillage résiste à la pression interne du fluide circulant à travers l'assemblage. Par contre, l'accrochage des inserts dans la surface externe du bout uni est d'autant meilleur que cet angle de réaction est faible. En effet, si l'angle est trop élevé, les dents des inserts risquent de ne pas accrocher le bout uni lors de la mise en pression, et de glisser sur celui-ci en engendrant un verrouillage déficient.

Le risque d'avoir une mauvaise tenue en pression est critique vers les jeux maximaux où l'angle de réaction est naturellement faible, tandis que le risque d'avoir un mauvais accrochage des inserts est critique vers les jeux minimaux où cet angle de réaction est naturellement élevé.

En conséquence, la position de l'insert de verrouillage par rapport au bout uni et au bout à emboîtement doit être définie pour tout jeu admis par des tolérances de fabrication entre la gorge d'ancrage et le bout uni. Or, la jonction de verrouillage connue limite les tolérances de fabrication sur les inserts et la gorge d'ancrage du bout à emboîtement. En effet, selon le jeu présent, l'insert de verrouillage peut prendre une configuration dans laquelle il s'applique à plat sur la surface de fond de la gorge d'ancrage ou sur la surface inclinée reliant la surface de fond et la surface frontale. Dans le cas où ces surfaces comportent des aspérités, l'orientation de l'insert par rapport au bout à emboîtement est perturbée, conduisant à un mauvais verrouillage de la jonction. L'enlèvement des aspérités est cependant coûteux.

Un but de l'invention est donc de concevoir un insert de verrouillage et une jonction correspondante qui permettent un bon accrochage sur une large gamme de jeux, tout en ayant un faible coût de fabrication.

Un autre but de l'invention, est d'optimiser le compromis entre la fiabilité d'accrochage de l'insert sur le bout uni et la tenue en pression du verrouillage.

A cet effet, l'invention a pour objet un assemblage tel qu'indiqué ci-dessus, la tête comprenant au moins une saillie frontale décalée radialement de la première saillie inclinée et adaptée pour s'appliquer contre la surface frontale annulaire de la gorge d'ancrage, la surface frontale annulaire et la surface inclinée formant un angle entre elles qui est inférieur à 180°.

Selon des modes particuliers de réalisation, l'assemblage comprend l'une ou plusieurs des caractéristiques suivantes :
- la tête comprend au moins une deuxième saillie inclinée, décalée, notamment radialement, de la première saillie inclinée et de la saillie frontale et adaptée pour s'appliquer contre la surface inclinée de la gorge d'ancrage ;
- la première et la deuxième saillie inclinées sont, selon une vue de côté, reliées par un profil concave ou rectiligne ;
- la saillie frontale et la saillie inclinée adjacente à la saillie frontale sont, selon une vue de côté, reliées par un profil concave ou rectiligne ;
- vu de côté, le pied de l'insert comprend au moins une dent d'accrochage adaptée pour s'accrocher sur une surface extérieure du bout uni ;
- la saillie frontale et la dent d'accrochage la plus proche sont, selon une vue de côté, reliées par un profil concave ou rectiligne ;
- vue de côté, la tête comporte un bec d'accrochage, une première ligne droite s'étendant depuis la saillie radiale vers le bec d'accrochage et une deuxième ligne droite reliant la saillie frontale à la première saillie inclinée, et l'angle entre ces deux lignes droites est compris entre 60 ° et 120 ° et de préférence inférieur à 90 ° ;
- la tête est une tête radialement extérieure, noyée au moins partiellement dans le talon d'ancrage et destinée à s'appliquer dans la gorge d'ancrage du bout à emboîtement, et le pied est un pied radialement intérieur, destiné à s'appliquer contre le bout uni ;
- la surface de fond qui délimite la gorge d'ancrage annulaire est une surface cylindrique, notamment s'étendant coaxialement par rapport à l'axe central (X-X), et la surface frontale annulaire est formée par un collet d'entrée du bout à emboîtement, la surface frontale annulaire s'étendant suivant un angle d'au moins 80° par rapport à l'axe central (X-X) ; et
- la surface inclinée a une inclinaison comprise entre 30° et 60° par rapport à l'axe central (X-X) ;
- toutes les saillies sont disposées de telle sorte que pour tout diamètre de la surface de fond du bout à emboîtement et de la surface extérieure du bout uni compris dans une gamme de tolérances et suivant une vue en coupe méridienne, l'insert de verrouillage prend appui sur au maximum trois ou deux emplacements à la fois de la gorge d'ancrage du bout à emboîtement.

L'invention sera mieux comprise à la lecture de la description qui va suivre, donnée uniquement à titre d'exemple et faite en se référant aux dessins annexés, sur lesquels :
- les Figures 1 à 3 sont des demi-vues en coupe méridienne d'un assemblage de deux tuyaux et d'une garniture d'étanchéité composite interposée entre eux, respectivement avant, pendant et après réalisation de l'assemblage verrouillé selon l'invention ;
- les Figures 4 et 5 sont des vues agrandies en coupe méridienne d'une partie de l'assemblage selon l'invention à des étapes différentes d'assemblage, le bout à emboîtement et le bout uni définissant un jeu minimal entre eux;
- les Figures 6 et 7 sont des vues agrandies en coupe méridienne d'une partie de l'assemblage selon l'invention à des étapes différentes d'assemblage, le bout à emboîtement et le bout uni définissant un jeu maximal entre eux;
- la Figure 8 est une vue méridienne de l'insert de verrouillage de l'assemblage des Figures 1 à 7 ;
- les Figures 9 et 10 sont des demi-vues en coupe méridienne d'un assemblage de deux tuyaux et d'une garniture d'étanchéité composite interposée entre eux après réalisation de l'assemblage verrouillé selon une variante de l'invention ; et
- la Figure 11 est une vue méridienne d'un insert de verrouillage selon la variante de l'invention montrée sur les Figures 9 et 10.

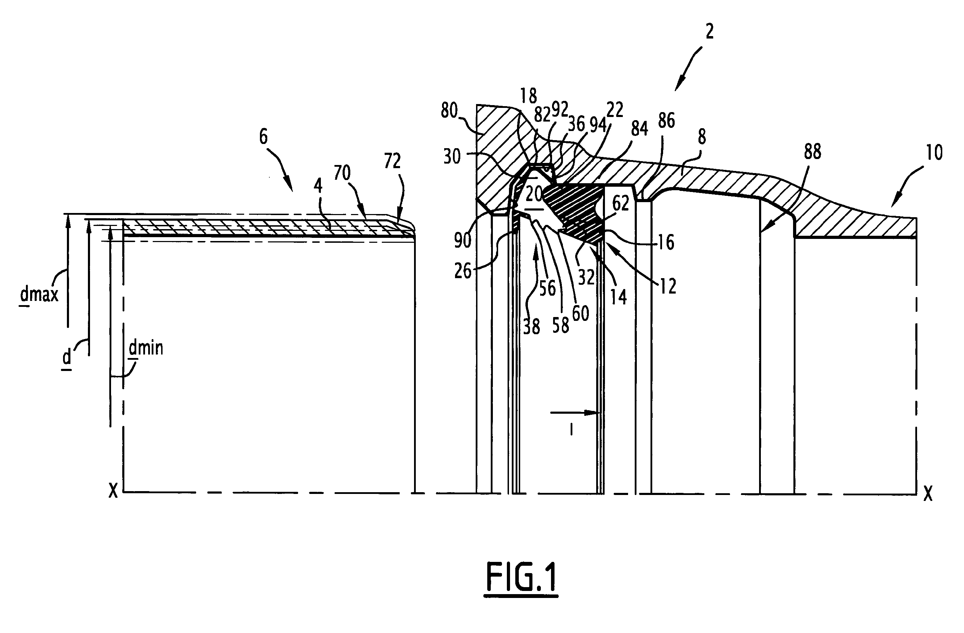

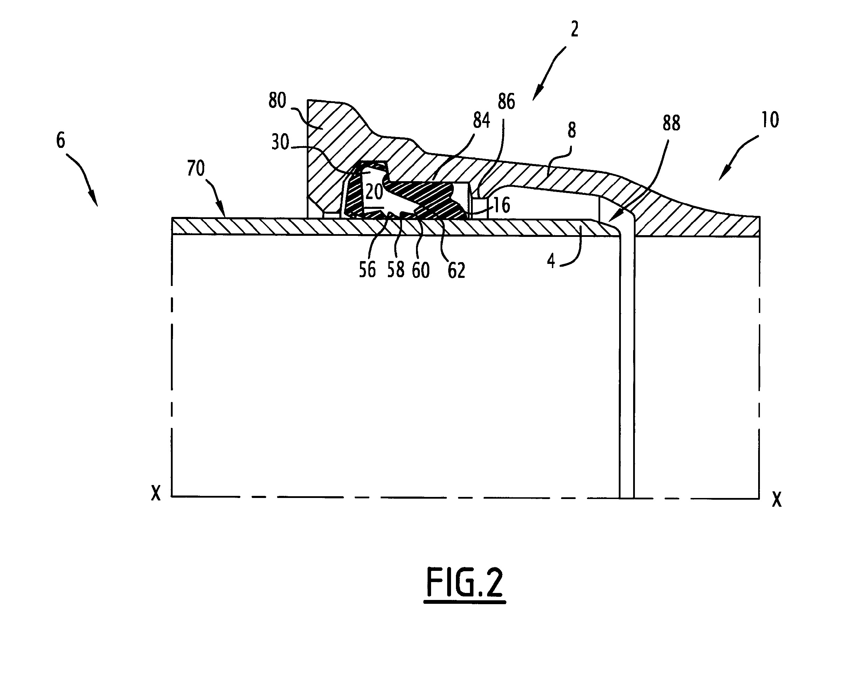

Sur les Figures 1 à 3 est représenté un assemblage étanche et verrouillé selon l'invention, désigné par la référence générale 2.

L'assemblage étanche 2 comprend un bout uni 4 ou bout mâle solidaire d'un premier tuyau 6, un bout à emboîtement 8 ou bout femelle solidaire d'un second tuyau 10, et une garniture d'étanchéité 12.

L'assemblage 2 s'étend suivant un axe central X-X. Dans ce qui suit, les expressions « radialement », « axialement », « circonférentiellement » et « méridienne » seront utilisées par rapport à cet axe.

La garniture d'étanchéité 12 comporte, en section méridienne, un anneau élastique 14 réalisé en matériau souple ou résilient, par exemple en élastomère, qui s'étend selon l'axe central X-X, dans lequel sont noyés une pluralité d'inserts de verrouillage 20.

L'anneau élastique 14 comprend un corps massif annulaire 16 vers le fond de l'emboîtement ainsi que, du côté de l'entrée de l'emboîtement, un talon d'ancrage 18 en saillie radialement vers l'extérieur et une lèvre circulaire d'étanchéité 26 en saillie radialement vers l'intérieur.

Le corps 16 et le talon 18 sont séparés par un épaulement périphérique 22.

La lèvre 26 s'étend sensiblement radialement vers l'axe X-X jusqu'au voisinage du diamètre interne minimum du corps 16. Les inserts 20 sont régulièrement répartis sur tout le pourtour de l'anneau 14. Chaque insert de verrouillage 20 est en matériau de grande dureté, par exemple en alliage métallique dur ou en céramique.

Chaque insert 20 comprend, en vue méridienne, une tête radialement extérieure 30 et un pied radialement intérieur 32. La tête 30 s'étend sensiblement radialement par rapport à l'axe X-X, tandis que le pied 32 est incliné par rapport à cet axe, de telle sorte qu'il converge vers l'axe X-X dans un sens d'introduction I du bout uni 4 dans le bout à emboîtement 8. L'insert 20 présente ainsi un profil coudé.

Chaque insert 20 est noyé partiellement dans le talon d'ancrage 18 de la garniture 12 et recouvert partiellement par la matière élastique du talon 18. Toutefois, le talon 18 comporte des évidements 36 au droit des inserts 20. Les évidements 36 sont ouverts radialement vers l'extérieur, de telle sorte que l'extrémité radialement extérieure de la tête 30 est quasiment libre de matière élastique. Les évidements 36 sont également axialement ouverts dans le sens d'introduction I.

De même, la garniture d'étanchéité 12 comprend des évidements 38, ouverts radialement vers l'intérieur, et situés à l'emplacement des inserts 20, de telle sorte que l'extrémité radialement intérieure des pieds 32 est libre de matière élastique.

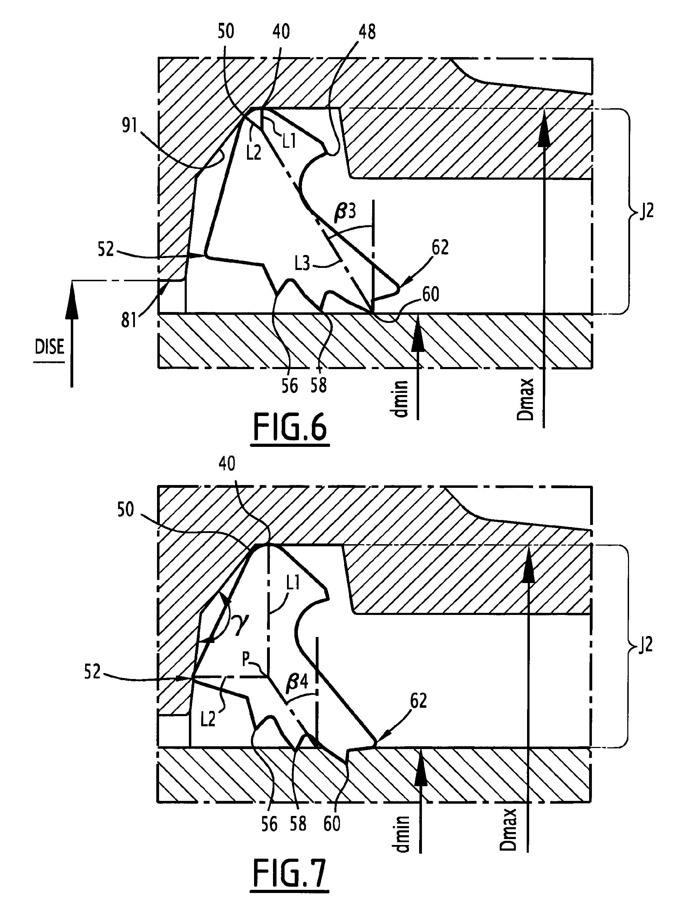

Comme on le voit plus précisément sur la Figure 6, la tête 30 comprend à son extrémité radialement extérieure un profilé constituant une saillie radiale 40. La tête 30 comprend en outre un bec de retenue 48 à arête vive dirigé axialement dans le sens I. Le bec 48 est quasiment libre de matière élastique grâce à l'évidement 36.

La tête 30 comprend en outre une saillie inclinée 50, s'étendant obliquement par rapport à l'axe central X-X.

En l'occurrence, les deux saillies 40, 50 sont formées par un profil en arc de cercle de l'insert de verrouillage, en vue méridienne.

La tête 30 comprend en outre une saillie frontale 52 radialement décalée de la saillie inclinée 50 vers l'axe X-X.

Une surface sensiblement plane S1 s'étend entre la saillie radiale 40 et le bec de retenue 48.et une surface sensiblement plane S2 s'étend entre les deux saillies inclinée 50 et frontale 52. Ces surfaces S1, S2 forment entre elles un angle α qui est inférieur à 90°.

Par ailleurs, le pied 32 comprend à son extrémité radialement intérieure trois dents d'accrochage 56, 58, 60 décalées axialement qui sont adaptées pour s'accrocher sur la surface extérieure 70 du bout uni 4 (voir ci-après) et qui, lorsque la garniture est à l'état de repos, s'étendent en dehors de l'anneau élastique 14. En vue méridienne, les dents 56, 58, 60 s'étendent sur une courbe convexe. Par ailleurs, le pied 32 comporte, du côté axial opposé à la tête 30, une butée d'accrochage 62 noyée dans le corps 16. La butée d'accrochage 62 a, en vue méridienne, un profil qui est arrondi par rapport au profil des dents d'accrochage 56, 58, 60.

La butée 62, qui a pour fonction de limiter la pénétration de l'insert 20 dans le bout uni 4 afin de ne pas détériorer celui-ci, présente de manière préférentielle une forme arrondie ou bombée afin de favoriser « l'écoulement » de l'élastomère lors de l'emboîtage du bout uni 4, ceci de manière à éviter les concentrations de contraintes qui pourraient provoquer des déchirures dans l'élastomère.

En se référant à nouveau à la Figure 1, on voit que le bout uni 4 comprend une surface extérieure cylindrique 70 de diamètre d munie d'un chanfrein d'entrée 72. Le bout uni 4 est fabriqué avec des tolérances diamétrales de telle sorte que le diamètre d réel peut être situé entre un diamètre extérieur maximal dₘₐₓ et un diamètre extérieur minimal dₘᵢₙ. Les diamètres dₘₐₓ et dₘᵢₙ sont indiqués en traits mixtes sur la Figure 1.

Le bout à emboîtement 8 comporte successivement, en allant axialement de l'entrée de l'emboîtement vers le fond, un collet d'entrée 80, une gorge d'ancrage annulaire 82 servant de logement au talon d'ancrage 18 de la garniture, une partie étagée 84, un bourrelet interne 86 et une cavité de réception 88, adaptée pour recevoir librement l'extrémité du bout uni 4.

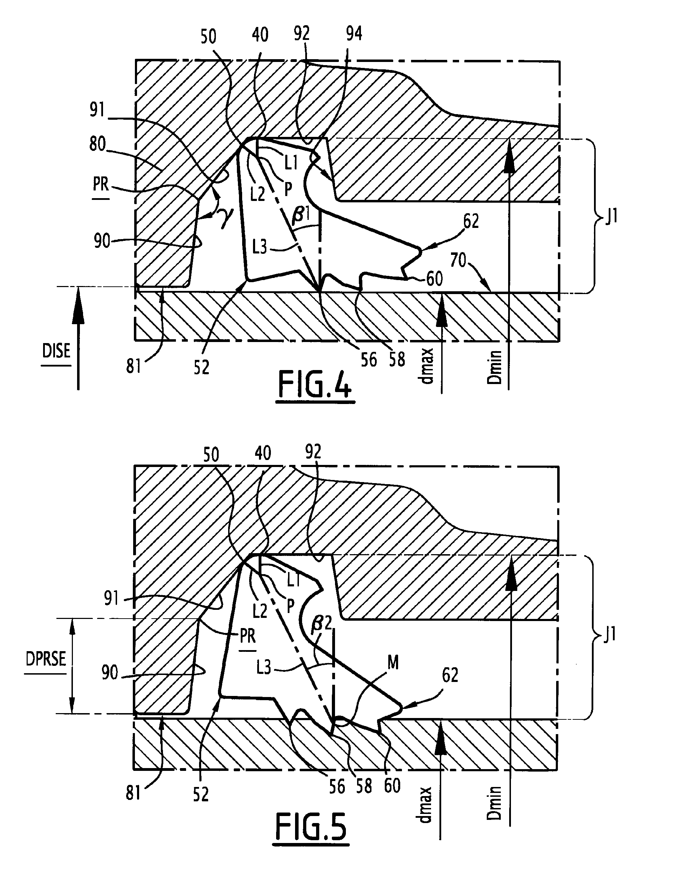

Le collet d'entrée 80 délimite une surface d'entrée 81, qui est une surface cylindrique de diamètre DISE (cf. Figure 4).

La gorge d'ancrage annulaire 82 est délimitée par une surface frontale annulaire 90 du collet d'entrée 80, par une surface inclinée 91, par une surface de fond cylindrique 92 à section circulaire d'axe X-X, ainsi que par une surface frontale 94 de la partie étagée 84.

De manière générale, la surface frontale 90 s'étend suivant un angle d'au moins 80° par rapport à l'axe central X-X et a une composante axiale dirigée dans le sens I. De préférence, la surface frontale 90 réalise un angle d'au moins 85° avec l'axe X-X. La surface frontale 90 s'étend depuis la surface d'entrée 81 jusqu'à la surface inclinée 91.

La surface inclinée 91 s'étend suivant un angle compris entre 30° et 60° par rapport à l'axe central X-X et a une composante axiale dirigée dans le sens I. La surface inclinée 91 est donc disposée radialement et axialement entre la surface de fond 92 et la surface frontale 90.

Par ailleurs, la surface frontale annulaire 90 se raccorde directement à la surface inclinée 91, qui se raccorde directement à la surface de fond 92. En vue méridienne, la surface frontale annulaire 90 se raccorde à la surface inclinée 91 en un point de raccordement PR. Ce point de raccordement PR est situé à une distance DPRSE de la surface d'entrée 81, distance qui est comprise entre 10% et 90% de la différence entre le diamètre de la surface d'entrée DISE et le diamètre D de la surface de fond 92. De préférence, la distance DPRSE est comprise entre 40% et 60% de cette différence ou entre 45% et 55% de cette différence.

L'angle γ inclus par les surfaces frontale 90 et inclinée 91 est inférieur à 180° et est notamment compris entre 110° et 160°.

Pour tout jeu entre les surfaces 70 et 92 compris dans la gamme des tolérances admises, l'insert 20 s'applique à la fois d'une part contre la surface de fond 92 et d'autre part contre la surface inclinée 91, et/ou contre la surface frontale 90 lorsque les tuyaux sont soumis à la pression interne du fluide qu'ils véhiculent.

Plus précisément, pour une pression donnée, lorsque le jeu entre les surfaces 70 et 92 est situé dans une première gamme de jeux délimité par le jeu minimal J1 (Fig. 4 et 5) et un jeu intermédiaire, l'insert de verrouillage 20 s'applique contre la surface de fond 92 et la surface inclinée 91 lorsque la pression est établie, mais il ne s'applique pas contre la surface frontale 90.

Lorsque le jeu entre les surfaces 70 et 92 est situé dans une deuxième gamme de jeux, délimité par le jeu maximal J2 (Fig. 6 et 7) et le jeu intermédiaire, l'insert de verrouillage 20 s'applique contre la surface de fond 92 et la surface frontale 90 lorsque la pression est établie, mais pas contre la surface inclinée 91. Il est à noter dans ce cas que, lors de la mise en pression et avant d'atteindre cette configuration finale d'appui, l'insert 20 passe d'abord par une configuration dans laquelle il s'applique contre la surface de fond 92 et la surface inclinée 91, puis par une configuration intermédiaire dans laquelle il s'applique simultanément contre la surface de fond 92, la surface inclinée 91 et la surface frontale 90.

La surface frontale 94 est dirigée vers le collet d'entrée 80, à l'encontre du sens I.

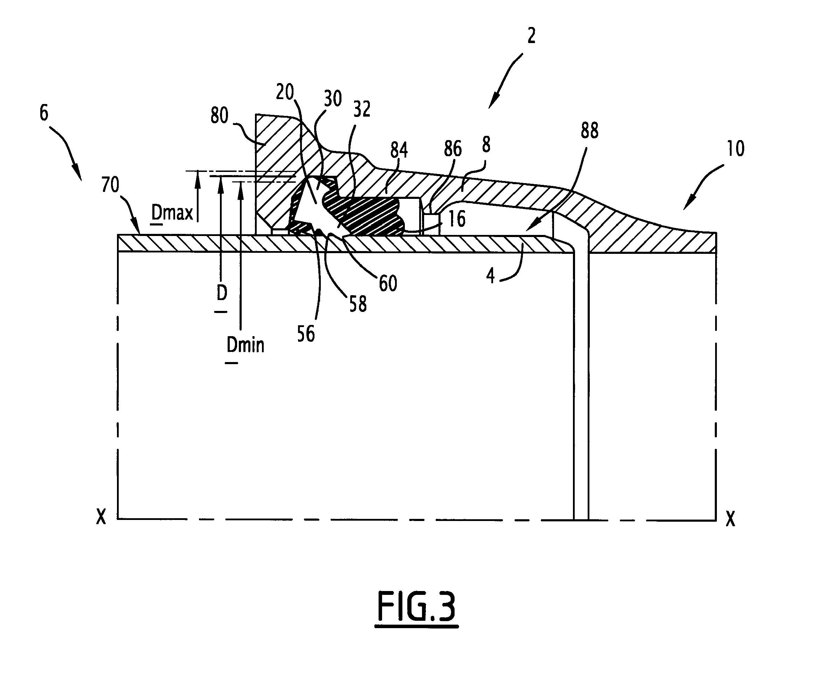

Comme indiqué sur la Figure 3, la surface de fond 92 est également soumise à des tolérances de fabrication, de telle sorte que son diamètre D réel peut varier entre un diamètre maximal Dₘₐₓ et un diamètre minimal Dₘᵢₙ.

Il est à noter que le diamètre maximal dₘₐₓ de la surface 70 est inférieur au diamètre DISE de la surface 81.

Le montage de l'assemblage selon l'invention est effectué de la manière suivante.

La garniture d'étanchéité 12 est tout d'abord introduite dans le bout à emboîtement 8, le corps 16 s'appliquant contre la partie étagée 84 et le talon d'ancrage 18 prenant place dans la gorge d'ancrage annulaire 82, de telle sorte que l'axe de la garniture 12 est confondu avec celui du bout à emboîtement.

Puis le bout uni 4 est aligné avec le bout à emboîtement et est introduit à travers la garniture 12 selon le sens I en repliant d'abord la lèvre 26 qui s'applique avec une certaine pression sur la surface externe 70. Lorsque le bout uni 4 franchit le seuil des inserts 20, ceux-ci s'inclinent par débattement angulaire à l'encontre du corps 16. L'introduction du bout uni 4 est poursuivie jusqu'à ce que son chanfrein 72 arrive à proximité du fond de la cavité 88.

Puis le bout uni 4 est ramené axialement en arrière de manière à provoquer le rebroussement des inserts 20. Les inserts 20 modifient leur inclinaison par rapport à l'axe X-X par un débattement angulaire inverse du précédent et de faible amplitude. Lors de ce rebroussement, au moins une des dents 56, 58, 60 s'accroche sur la surface externe 70 du bout uni 4 et offre alors une sensible résistance à la continuation du mouvement axial de retrait du bout uni 4. Le verrouillage de l'assemblage est ainsi réalisé.

Par la suite, en se référant aux Figures 4 à 7, il sera décrit le fonctionnement de la garniture d'étanchéité selon l'invention en fonction des tolérances diamétrales sur les diamètres d et D sous l'action du fluide sous pression. Sur ces Figures, l'anneau 14 a été omis pour une meilleure clarté de représentation.

Après le débattement angulaire précité des inserts 20 lors de l'assemblage des tuyaux 6 et 10, chaque insert 20 prend une position d'inclinaison qui varie en fonction du jeu présent entre les diamètres d et D.

Sur la Figure 4 est représentée la position d'un insert 20 lors de l'accrochage sur le bout uni 4 à la mise en pression dans le cas où le jeu entre les tuyaux est un jeu minimal J1. A cet effet, le bout à emboîtement 8 comprend une gorge d'ancrage 82 dont le diamètre D correspond au diamètre minimal Dₘᵢₙ, tandis que le bout uni 4 a une surface 70 dont le diamètre extérieur d correspond au diamètre maximal d_{max.} Les deux diamètres Dₘᵢₙ et dₘₐₓ définissent ainsi un jeu J1 minimal entre les deux surfaces 92 et 70.

On voit que, lors de l'accrochage sur le bout uni 4, l'insert 20 s'applique en deux points contre la gorge 82, d'une part avec sa saillie radiale 40 contre la surface de fond 92 et d'autre part avec sa saillie inclinée 50 contre la surface inclinée 91. De plus, seule la dent d'accrochage 56 la plus proche de l'entrée d'emboîtement s'applique contre la surface extérieure 70 du bout uni.

L'insert 20 est incliné suivant un angle de réaction qui est défini de la manière suivante. En vue méridienne, les deux lignes L1, L2 qui s'étendent perpendiculairement aux surfaces 92, 91 au niveau des saillies respectives 40, 50 d'application de l'insert 20 contre la gorge 82, se coupent en un point P. Le point d'application de la dent 56 sur la surface 70 définit avec le point P une troisième ligne L3 servant de support à la force de réaction de l'insert 20. L'angle β1 mesuré entre cette ligne L3 et un plan perpendiculaire à l'axe X-X est appelé « angle de réaction » à l'accrochage.

L'accrochage de l'insert 20 est d'autant meilleur que cet angle de réaction est faible. Grâce à la présence de la saillie radiale 40 et de la surface inclinée 91, le point P se trouve dans une position qui est axialement relativement proche de la dent 56, de telle sorte que l'angle β1 est faible pour le jeu J1 donné, ce qui favorise l'accrochage de l'insert de verrouillage 20 sur la surface 70.

Sur la Figure 5 est représentée la partie de l'assemblage de la Figure 4 lorsque la pression est établie.

On voit que, après l'accrochage de l'insert 20, celui-ci a basculé dans le sens horaire par rapport à la Figure 4, et que les trois dents d'accrochage 56, 58, 60 pénètrent à présent dans la matière du bout uni 4.

Comme précédemment, l'insert de verrouillage 20 s'applique avec sa saillie radiale 40 contre la surface de fond 92 et avec sa saillie 50 contre la surface inclinée 91.

Le point P est de nouveau le point d'intersection des lignes L1, L2 des normales aux surfaces 92, 91 au niveau des saillies 40, 50. Par contre, l'assemblage définit une ligne L3, qui s'étend entre le point P et un point M situé sensiblement à mi-distance axiale entre les dents d'accrochage 56 et 60.

La ligne L3 définit avec un plan perpendiculaire à l'axe X-X un angle de réaction β2 sous pression établie qui est ainsi relativement grand pour le jeu J1 donné, ce qui conduit à une bonne tenue en pression de l'assemblage verrouillé.

II est à noter que, lors du basculement de l'insert 20 lors de la mise en pression, le maintien de contact au niveau de la saillie radiale 40 ainsi que l'accrochage de dents axialement décalées dans le sens I de la dent 56 la plus proche de l'entrée d'emboîtement permet d'augmenter l'angle de réaction et entre autres de compenser ainsi la diminution d'angle de réaction résultant du basculement de l'insert dans le sens horaire; on aboutit de ce fait à un angle β2 suffisamment grand pour garantir une bonne tenue en pression.

Dans le cas du jeu minimal J1, la saillie frontale 52 est hors de contact avec la surface frontale 90 aussi bien lors de l'introduction du bout uni 4 dans le bout à emboîtement 8 que lors et après la mise en pression.

Les explications en référence aux Figures 4 et 5 sont valables pour tout jeu compris dans la première gamme de jeux.

La Figure 6 montre un assemblage analogue à celui de la Figure 4 avec les différences suivantes.

La surface 92 a un diamètre Dₘₐₓ, tandis que la surface 70 a un diamètre dₘᵢₙ, de telle sorte que ces deux surfaces définissent entre elles un jeu J2 qui est supérieur au jeu J1. Ce jeu J2 est le jeu maximal admis pour des tolérances de fabrication du bout uni 4 et du bout à emboîtement 8.

On voit que, lors de l'accrochage sur le bout uni 4,lors de la mise en pression, l'insert 20 s'applique en deux points contre la gorge 82, d'une part avec sa saillie radiale 40 contre la surface de fond 92 et d'autre part avec sa saillie inclinée 50 contre la surface inclinée 91. La saillie frontale 52 est hors de contact avec la surface frontale 90. De plus, seule la dent d'accrochage 60 la plus éloignée de l'entrée d'emboîtement s'applique contre la surface extérieure 70 du bout uni.

L'angle de réaction à l'accrochage β3 obtenu est mesuré entre la direction radiale et une ligne passant par le point P, sensiblement identique à celui de l'assemblage de la Figure 5, et par le point de contact entre la surface 70 et la dent 60. Cet angle β3 est faible et donc compatible avec un bon accrochage de l'insert 20.

La Figure 7 montre l'assemblage de la Figure 6 une fois la pression établie, donc après accrochage de l'insert 20 et après basculement de celui-ci dans le sens horaire sur les Figures.

A l'issue de ce basculement, l'insert 20 s'applique exclusivement avec sa saillie radiale 40 contre la surface de fond 92 et exclusivement avec sa saillie frontale 52 contre la surface frontale 90, tandis que l'autre saillie 50 est hors de contact avec la surface 91. De plus, seules la dent intermédiaire 58 et la dent 60 la plus éloignée de l'entrée d'emboîtement s'accrochent dans la surface 70 du bout uni 4.

A jeu maximal J2, le contact au niveau de la saillie frontale 52 augmente l'angle de réaction et compense la diminution d'angle de réaction résultant du basculement de l'insert dans le sens horaire lors de la mise en pression. On obtient ainsi, grâce à cette saillie 52 qui génère un point P se situant à proximité de l'axe X-X, un angle de réaction sous pression établie β4 final suffisamment grand pour garantir une bonne tenue en pression de l'assemblage verrouillé.

Les explications en référence aux Figures 6 et 7 sont valables pour tout jeu compris dans la deuxième gamme de jeux.

Pour tous les jeux admis entre les surfaces 70 et 92, l'insert 20 s'applique, en vue méridienne, contre la surface de fond 92, la surface inclinée 91 et/ou la surface frontale 90 à chaque emplacement de contact, selon un contact ponctuel et non linéaire. Ainsi, les tolérances de fabrication de l'insert et des surfaces 90, 91, 92 peuvent être importantes.

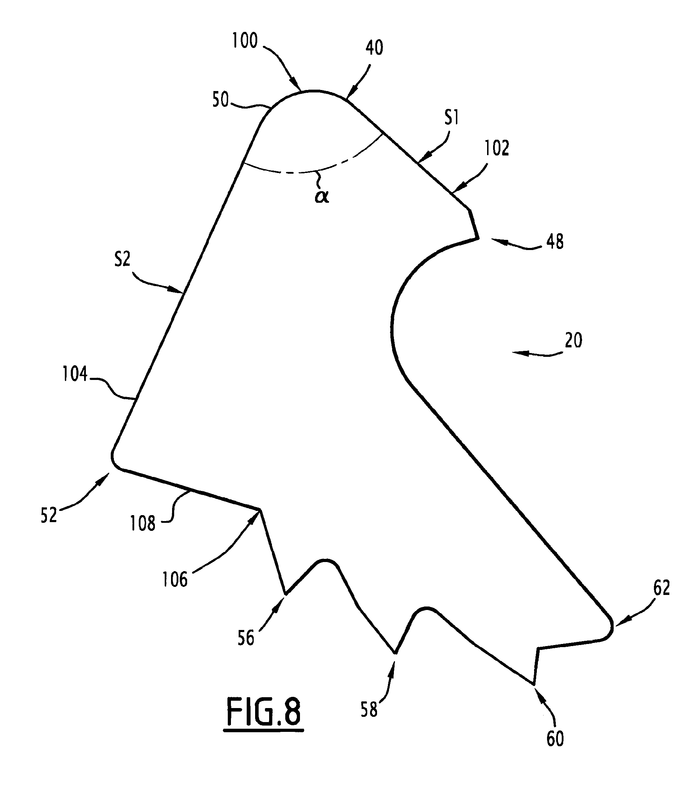

Sur la Figure 8 est représenté l'insert 20 à plus grande échelle.

Les explications suivantes se réfèrent à la vue méridienne, donc de côté, de l'insert de verrouillage 20.

L'insert de verrouillage 20 comporte un profil arrondi en arc de cercle 100, qui forme les saillies 40 et 50. Ce profil arrondi 100 s'étend sur une plage angulaire supérieure à 90°.

Entre le profil arrondi 100 et le bec d'accrochage 48 s'étend un profil rectiligne 102. Ce profil 102 se raccorde d'une manière tangentielle au profil 100 et forme la surface S1.

Entre le profil arrondi 100, ou la saillie inclinée 50, et la saillie frontale 52, s'étend un autre profil rectiligne 104. Ce profil 104 se raccorde d'une manière tangentielle au profil 100 et forme la surface S2.

La saillie frontale 52 est formée par un profil arrondi, de préférence en arc de cercle, s'étendant sur une plage angulaire supérieure à 90°.

La saillie frontale 52 et la dent d'accrochage 56 sont reliées par un profil concave 106. Ce profil concave 106 constitue le dégagement de la dent 56 et comprend un profil partiel 108 rectiligne qui s'étend depuis la saillie frontale 52.

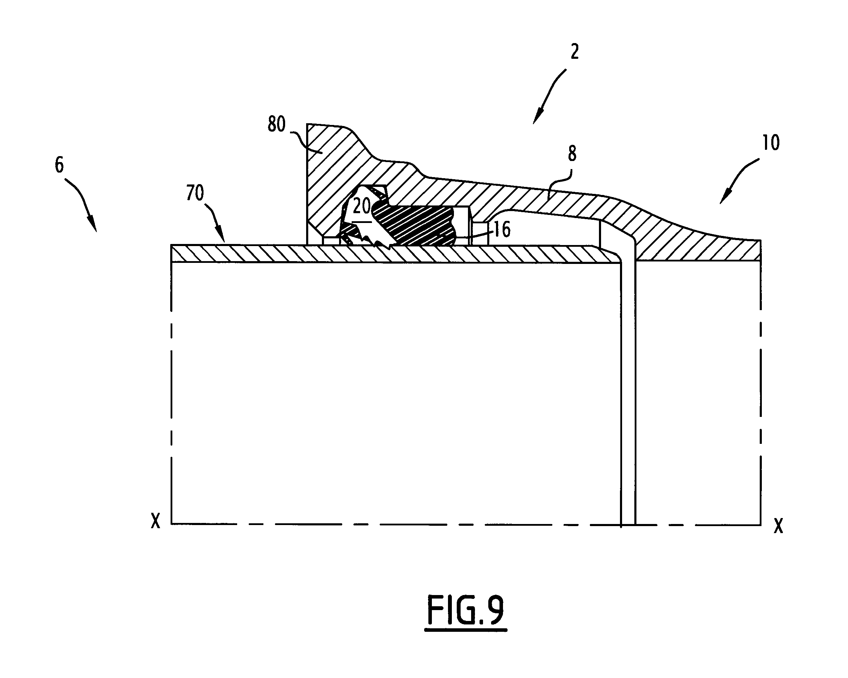

Les Figures 9 à 11 montrent une variante de l'invention, qui diffère du mode de réalisation ci-dessus uniquement par ce qui suit. Les éléments analogues portent des références identiques.

La Figure 9 montre l'assemblage à jeu moyen.

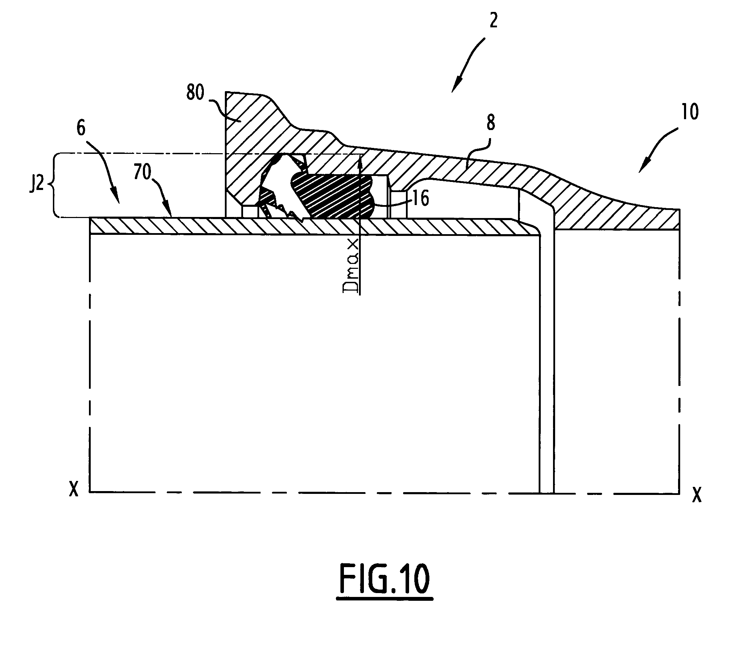

La Figure 10 montre l'assemblage à jeu maximal J2.

L'insert de verrouillage 20 comporte une deuxième saillie inclinée 54, décalée radialement de la première saillie inclinée 50. Cette saillie inclinée 54 est adaptée pour s'appliquer contre la surface inclinée 91 de la gorge d'ancrage.

En vue méridienne, donc en vue de côté, un profil rectiligne 104 s'étend entre la saillie frontale 52 et la deuxième saillie inclinée 54 tandis que la deuxième saillie inclinée 54 et la première saillie inclinée 50 sont séparées par un profil concave 110. La droite qui relie les deux saillies inclinées 50, 54 forme avec le profil rectiligne 104 un angle δ qui est différent de l'angle γ entre les deux surfaces frontale 90 et inclinée 91, et de préférence inférieur à cet angle. Ainsi, le nombre et l'étendue des emplacements de contact entre l'insert de verrouillage 20 et les surfaces 90, 91 sont faibles.

L'angle δ est inférieur à 180°.

Par ailleurs, le profil concave 110 aide à minimiser les emplacements de contact entre l'insert de verrouillage 20 et la surface inclinée 91.

En variante non représentée, les deux saillies inclinées 50,54 sont séparées par un profil rectiligne.

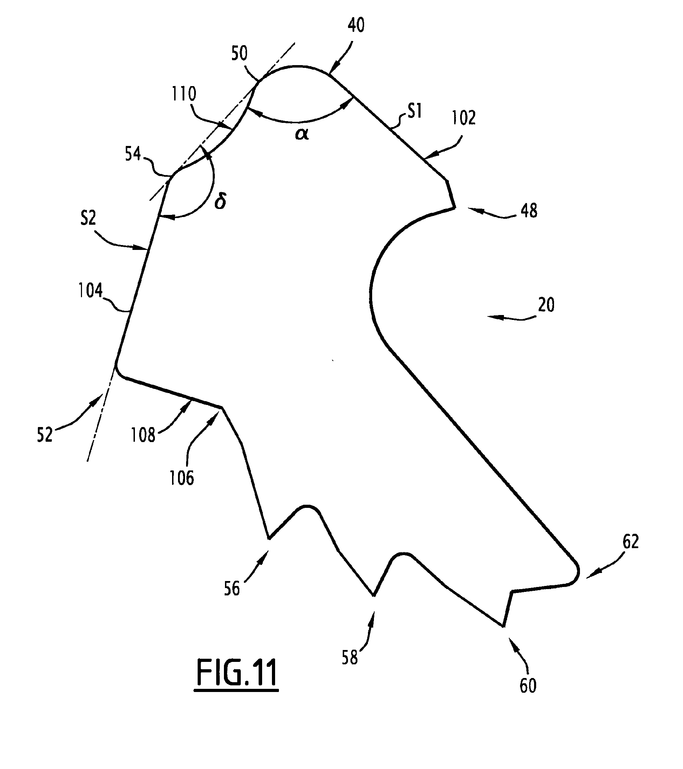

Aussi, en variante non représentée, la saillie frontale 52 et la saillie inclinée adjacente à la saillie frontale, qui est la saillie 54 sur le Figure 11, sont reliées par un profil concave.

Grâce aux caractéristiques géométriques des inserts 20 et des surfaces 90, 91, la garniture d'étanchéité conduit a un bon compromis entre l'accrochage des inserts sur le bout uni et la tenue en pression, indépendamment du jeu réel existant entre les surfaces 70 et 92.

En outre, les évidements 36 fiabilisent l'appui des inserts 20 vers les jeux minimaux, en réduisant l'effort d'emboîtage du bout uni 4 et en évitant les contraintes de compression dans l'élastomère susceptibles d'engendrer un mauvais positionnement des inserts 20 par basculement dans un sens tendant à augmenter l'angle de réaction (et donc à nuire au bon accrochage des inserts 20 à jeu minimal). De plus, les évidements 36 facilitent la déformation globale de l'anneau 14 lors de sa mise en place de la garniture dans le bout à emboîtement.

L'invention peut comporter également les caractéristiques suivantes :
- Le pied 32 comporte une butée d'accrochage 62 qui est noyée dans le corps 16 et qui est disposée du côté axialement opposé à la tête 30.
- La butée d'accrochage 62 a, vue en coupe méridienne selon l'axe central X-X, un profil qui est plus arrondi que le profil des dents d'accrochage 56, 58, 60.
- L'anneau 14 comprend au moins un évidement 36 au droit d'un insert de verrouillage 20, et l'évidement 36 est ouvert radialement vers l'extérieur de telle sorte qu'une extrémité radiale de la tête 30 est quasiment libre de matière élastique.
- Les dents d'accrochage s'étendent en dehors de l'anneau 14.
- La tête 30 de chaque insert de verrouillage 20 comprend un bec de retenue 48 dirigé axialement à l'opposé de la première saillie inclinée 50, et l'évidement 36 est axialement ouvert de telle sorte que le bec de retenue 48 est quasiment libre de matière élastique.
- Le talon d'ancrage 18 et le corps 16 sont séparés par au moins un creux, notamment une gorge périphérique ou des évidements alignés circonférentiellement avec les inserts 20.
- La surface frontale 90 se trouve côté entrée du bout à emboîtement.

## Revendications

1. Assemblage étanche et verrouillé, du type comprenant un bout uni (4) d'un premier élément de canalisation, un bout à emboîtement (8) d'un second élément de canalisation et une garniture d'étanchéité composite (12) pour l'assemblage étanche et verrouillé entre le bout uni (4) et le bout à emboîtement (8), la garniture d'étanchéité comprenant d'une part un anneau (14) en matière élastique qui s'étend selon un axe central (X-X), et qui a un corps (16) et un talon d'ancrage (18), et d'autre part au moins un insert de verrouillage (20) noyé au moins partiellement dans le talon d'ancrage (18),
le bout à emboîtement comprenant une gorge d'ancrage (82) annulaire, la gorge d'ancrage (82) étant délimitée par une surface inclinée (91) disposée axialement et radialement entre une surface de fond (92) et une surface frontale (90) annulaire,
l'insert de verrouillage comprenant
- une tête (30), adaptée pour être insérée dans la gorge d'ancrage (82) du bout à emboîtement, et un pied (32),
la tête (30) comportant une saillie radiale (40), adaptée pour s'appliquer contre la surface de fond (92) de la gorge d'ancrage (82) et une première saillie inclinée (50), adaptée pour s'appliquer contre la surface inclinée (91) de la gorge d'ancrage (82),
la tête (30) comprenant au moins une saillie frontale (52) décalée radialement de la première saillie inclinée (50), a surface frontale annulaire (90) et la surface inclinée (91) formant un angle (γ) entre eues qui est inférieur à 180°, **caracterisé en ce que** ladite saillie frontale (52) est adaptée pour s'appliquer contre la surface frontale annulaire (90) de la gorge d'ancrage (82).

2. Assemblage selon la revendication 1, **caractérisé en ce que** la tête (30) comprend au moins une deuxième saillie inclinée (54), décalée, notamment radialement, de la première saillie inclinée (50) et de la saillie frontale (52) et adaptée pour s'appliquer contre la surface inclinée (91) de la gorge d'ancrage (82).

3. Assemblage selon la revendication 2, **caractérisé en ce que** la première et la deuxième saillie inclinées (50, 54) sont, selon une vue de côté, reliées par un profil concave (110) ou rectiligne.

4. Assemblage selon l'une quelconque des revendications précédentes, **caractérisé en ce que** la saillie frontale (52) et la saillie inclinée adjacente à la saillie frontale (52) sont, selon une vue de côté, reliées par un profil concave ou rectiligne (104).

5. Assemblage selon l'une quelconque des revendications précédentes, **caractérisé en ce que**, vu de côté, le pied (32) comprend au moins une dent d'accrochage (56, 58, 60) adaptée pour s'accrocher sur une surface extérieure (70) du bout uni (4).

6. Assemblage selon la revendication 5, **caractérisé en ce que** la saillie frontale (52) et la dent d'accrochage (56) la plus proche sont, selon une vue de côté, reliées par un profil concave (106) ou rectiligne.

7. Assemblage selon l'une quelconque des revendications précédentes, **caractérisé en ce que**, vue de côté, la tête (30) comporte un bec d'accrochage (48), une première ligne droite s'étendant depuis la saillie radiale (40) vers le bec d'accrochage et une deuxième ligne droite reliant la saillie frontale (52) à la première saillie inclinée (50), et **en ce que** l'angle (α) entre ces deux lignes droites est compris entre 60° et 120° et de préférence inférieur à 90°.

8. Assemblage selon l'une quelconque des revendications précédentes ,**caractérisé en ce que** la tête est une tête (30) radialement extérieure, noyée au moins partiellement dans le talon d'ancrage (18) et destinée à s'appliquer dans la gorge d'ancrage (82) du bout à emboîtement (8), et **en ce que** le pied est un pied (32) radialement intérieur, destiné à s'appliquer contre le bout uni (4).

9. Assemblage selon l'une quelconque des revendications précédentes, **caractérisé en ce que** la surface de fond (92) qui délimite la gorge d'ancrage (82) annulaire est une surface cylindrique, notamment s'étendant coaxialement par rapport à l'axe central (X-X), et **en ce que** la surface frontale annulaire (90) est formée par un collet d'entrée (80) du bout à emboîtement (8), la surface frontale annulaire (90) s'étendant suivant un angle d'au moins 80° par rapport à l'axe central (X-X).

10. Assemblage selon la revendication 9, **caractérisé en ce que** la surface inclinée (91) a une inclinaison comprise entre 30° et 60° par rapport à l'axe central (X-X).

11. Assemblage selon la revendication 10, **caractérisé en ce que** toutes les saillies (40, 50, 52) sont disposées de telle sorte que pour tout diamètre de la surface de fond (92) du bout à emboîtement et de la surface extérieure (70) du bout uni compris dans une gamme de tolérances et suivant une vue en coupe méridienne, l'insert de verrouillage (20) prend appui sur au maximum trois ou deux emplacements à la fois de la gorge d'ancrage (82) du bout à emboîtement.

## Patentansprüche

1. Dichte und verriegelte Anordnung der Art, die ein Einsteckende (4) eines ersten Leitungselements und ein Aufsteckende (8) eines zweites Leitungselements und eine Kompositdichtung (12) für die dichte und verriegelte Anordnung zwischen dem Einsteckende (4) und dem Aufsteckende (8) umfasst, wobei die Dichtung zum einen einen Ring (14) aus elastischem Material, der sich gemäß einer Mittelachse (X-X) erstreckt und der einen Körper (16) und einen Verankerungsabsatz (18) hat, und zum anderen mindestens einen Verriegelungseinsatz (20), der zumindest teilweise in den Verankerungsabsatz (18) eingebettet ist, umfasst,
wobei das Aufsteckende eine ringförmige Verankerungsnut (82) umfasst, die von einer geneigten Fläche (91) begrenzt ist, die axial und radial zwischen einer Bodenfläche (92) und einer ringförmigen Stirnfläche (90) angeordnet ist,
wobei der Verriegelungseinsatz umfasst:
- einen Kopf (30), der angepasst ist, in die Verankerungsnut (82) des Aufsteckelements eingefügt zu werden, und einen Fuß (32),
wobei der Kopf (30) einen radialen Vorsprung (40), der angepasst ist, sich gegen die Bodenfläche (92) der Verankerungsnut (82) zu drücken, und einen ersten geneigten Vorsprung (50), der angepasst ist, sich gegen die geneigte Fläche (91) der Verankerungsnut (82) zu drücken, umfasst,
wobei der Kopf (30) mindestens einen Stirnvorsprung (52) umfasst, der radial zu dem ersten geneigten Vorsprung (50) versetzt ist, wobei die ringförmige Stirnfläche (90) und die geneigte Fläche (91) miteinander einen Winkel (γ) bilden, der kleiner als 180° ist, **dadurch gekennzeichnet, dass** der Stirnvorsprung (52) angepasst ist, sich gegen die ringförmige Stirnfläche (90) der Verankerungsnut (82) zu drücken.

2. Anordnung nach Anspruch 1, **dadurch gekennzeichnet, dass** der Kopf (30) mindestens einen zweiten geneigten Vorsprung (54) umfasst, der, insbesondere radial, zu dem ersten geneigten Vorsprung (50) und dem Stirnvorsprung (52) versetzt ist und angepasst ist, sich gegen die geneigte Fläche (91) der Verankerungsnut (82) zu drücken.

3. Anordnung nach Anspruch 2, **dadurch gekennzeichnet, dass** der erste und der zweite geneigte Vorsprung (50, 54) gemäß einer Seitenansicht durch ein konkaves (110) oder geradliniges Profil verbunden sind.

4. Anordnung nach einem beliebigen der vorhergehenden Ansprüche, **dadurch gekennzeichnet, dass** der Stirnvorsprung (52) und der zum Stirnvorsprung (52) benachbarte geneigte Vorsprung gemäß einer Seitenansicht durch ein konkaves oder geradliniges (104) Profil verbunden sind.

5. Anordnung nach einem beliebigen der vorhergehenden Ansprüche, **dadurch gekennzeichnet, dass** von der Seite gesehen der Fuß (32) mindestens einen Eingreifzahn (56, 58, 60) umfasst, der angepasst ist, mit einer Außenfläche (70) des Einsteckendes (4) in Eingriff zu treten.

6. Anordnung nach Anspruch 5, **dadurch gekennzeichnet, dass** der Stirnvorsprung (52) und der am nächsten liegende Eingreifzahn (56) gemäß einer Seitenansicht durch ein konkaves (106) oder geradliniges Profil verbunden sind.

7. Anordnung nach einem beliebigen der vorhergehenden Ansprüche, **dadurch gekennzeichnet, dass** von der Seite gesehen der Kopf (30) einen Eingreifschnabel (48) aufweist, wobei eine erste gerade Linie sich von dem radialen Vorsprung (40) zu dem Eingreifschnabel erstreckt und eine zweite gerade Linie den Stirnvorsprung (52) mit dem ersten geneigten Vorsprung (50) verbindet und dass der Winkel (α) zwischen diesen zwei geraden Linien zwischen 60° und 120° liegt und vorzugsweise kleiner als 90° ist.

8. Anordnung nach einem beliebigen der vorhergehenden Ansprüche, **dadurch gekennzeichnet, dass** der Kopf ein radial außenliegender Kopf (30) ist, der mindestens teilweise in den Verankerungsabsatz (18) eingebettet ist und vorgesehen ist, sich gegen die Verankerungsnut (82) des Aufsteckendes (8) zu drücken, und dass der Fuß ein radial innenliegender Fuß (32) ist, der vorgesehen ist, sich gegen das Einsteckende (4) zu drücken.

9. Anordnung nach einem beliebigen der vorhergehenden Ansprüche, **dadurch gekennzeichnet, dass** die Stirnfläche (92), die die ringförmige Verankerungsnut (82) begrenzt, eine zylindrische Fläche ist, insbesondere sich koaxial zu der Mittelachse (X-X) erstreckt, und dass die ringförmige Stirnfläche (90) von einem Eintrittsbund (80) des Aufsteckendes (8) gebildet wird, wobei die ringförmige Stirnfläche (90) sich gemäß einem Winkel von mindestens 80° in Bezug auf die Mittelachse (X-X) erstreckt.

10. Anordnung nach Anspruch 9, **dadurch gekennzeichnet, dass** die geneigte Fläche (91) eine Neigung zwischen 30° und 60° in Bezug auf die Mittelachse (X-X) aufweist.

11. Anordnung nach Anspruch 10, **dadurch gekennzeichnet, dass** alle Vorsprünge (40, 50, 52) in der Weise angeordnet sind, dass für jeden Durchmesser der Stirnfläche (92) des Aufsteckendes und der Außenfläche (70) des Einsteckendes innerhalb eines Toleranzbereichs und gemäß einer Ansicht im Meridianschnitt der Verriegelungseinsatz (20) sich zugleich auf maximal drei oder zwei Stellen der Verankerungsnut (82) des Aufsteckendes abstützt.

## Claims

1. A sealed and locked assembly, of the type comprising a spigot (4) of a first pipe element, a socket (8) of a second pipe element, and a composite sealing gasket (12) for the sealed and locked assembly between the spigot (4) and the socket (8), the sealing gasket comprising a ring (14) made from an elastic material that extends along the central axis (X-X), and which has a body (16) and an anchoring heel (18) on the one hand, and at least one locking insert (20) at least partially embedded in the anchoring heel (18) on the other hand,
the socket comprising an annular anchoring groove (82), the anchoring groove (82) being defined by an inclined surface (91) positioned axially and radially between a bottom surface (92) and an annular frontal surface (90),
the locking insert comprising
- a head (30) suitable for being inserted into the anchoring groove (82) of the socket, and a foot (32),
the head (30) including a radial projection (40), designed to press against the bottom surface (92) of the anchoring groove (82) of the socket and a first inclined projection (50), suitable for pressing against the inclined surface (91) of the anchoring groove (82),
the head (30) comprising at least one frontal projection (52) that is radially offset from the first inclined projection (50), the annular frontal surface (90) and the inclined surface (91) forming an angle (γ) smaller than 180° between them, **characterized in that** the frontal projection (52) is designed to press against the annular frontal surface (90) of the anchoring groove (82).

2. The assembly according to claim 1, **characterized in that** the head (30) comprises at least one second inclined projection (54), which is offset, in particular radially offset, from the first inclined projection (50) and the frontal projection (52) and designed to press against the inclined surface (91) of the anchoring groove (82).

3. The assembly according to claim 2, **characterized in that** the first and second inclined projections (50, 54) are, in side view, connected by a concave or rectilinear profile (110).

4. The assembly according to any one of the preceding claims, **characterized in that** the frontal projection (52) and the inclined projection adjacent to the frontal projection (52) are, in side view, connected by a concave or rectilinear profile (104).

5. The assembly according to any one of the preceding claims, **characterized in that** in side view, the foot (32) of the insert comprises at least one catching tooth (56, 58, 60) adapted to catch on an outer surface (70) of the spigot (4).

6. The assembly according to claim 5, **characterized in that** the frontal projection (52) and the closest catching tooth (56) are, in side view, made by a concave or rectilinear profile (106).

7. The assembly according to any one of the preceding claims, **characterized in that** in side view, the head (30) includes a catching nose (48), a first straight line extending from the radial projection (40) toward the catching nose and a second straight line connecting the frontal projection (52) to the first inclined projection (50), and **in that** the angle (α) between said two straight lines is comprised between 60° and 120° and preferably smaller than 90°.

8. The assembly according to any one of the preceding claims, **characterized in that** the head (30) is a radially outer head, at least partially embedded in the anchoring heel (18) and designed to press in the anchoring groove (82) of the socket (8), and **in that** the foot is a radially inner foot (32), designed to press against the spigot (4).

9. The assembly according to any one of the preceding claims, **characterized in that** the bottom surface (92) that defines the annular anchoring groove (82) is a cylindrical surface, in particular extending coaxially relative to the central axis (X-X), and the annular frontal surface (90) is formed by an inlet flange (80) of the socket (8), the annular frontal surface (90) extending over an angle of at least 80° relative to the central axis (X-X).

10. The assembly according to claim 9, **characterized in that** the inclined surface (91) has an incline comprised between 30° and 60° relative to the central axis (X-X).

11. The assembly according to claim 10, **characterized in that** all of the projections (40, 50, 52) are arranged such that for any diameter of the bottom surface (92) of the socket and the outer surface (70) of the spigot comprised in an allowance range and in a meridian cross-sectional view, the locking insert (20) bears at the same time on at most three or two locations of the anchoring groove (82) of the socket.
